Europäisches Patentamt

European Patent Office

Office européen des brevets

(19)

(11) Veröffentlichungsnummer: **0 226 714**
B1

(12) **EUROPÄISCHE PATENTSCHRIFT**

(45) Veröffentlichungstag der Patentschrift:
15.11.89

(51) Int. Cl.⁴: **B60T 13/38**, B60T 17/18

(21) Anmeldenummer: **86112275.2**

(22) Anmeldetag: **04.09.86**

(54) Druckmittelbetätigte Bremsanlage.

(30) Priorität: **14.12.85 DE 3544356**

(43) Veröffentlichungstag der Anmeldung:
**01.07.87 Patentblatt 87/27**

(45) Bekanntmachung des Hinweises auf die Patenterteilung:
**15.11.89 Patentblatt 89/46**

(84) Benannte Vertragsstaaten:
**DE FR GB IT SE**

(56) Entgegenhaltungen:
**EP-A- 0 088 911**
**FR-A- 2 161 926**

(73) Patentinhaber: **WABCO Westinghouse Fahrzeugbremsen GmbH, Am Lindener Hafen 21 Postfach 91 12 80, D-3000 Hannover 91(DE)**

(72) Erfinder: **Petersen, Erwin, Dr. Ing., Fliederweg 22, D-3051 Wunstorf(DE)**

(74) Vertreter: **Schrödter, Manfred, WABCO Westinghouse Fahrzeugbremsen GmbH Am Lindener Hafen 21 Postfach 91 12 80, D-3000 Hannover 91(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine druckmittelbetätigte Bremsanlage gemäß dem Oberbegriff des Patentanspruchs 1.

Eine derartige Bremsanlage ist bekannt. Ihre Betriebsbremsanlage dient in bekannter Weise der normalen betriebsmäßigen Abbremsung des Fahrzeugs, während die bei Druckabfall in der Vorratsleitung und/oder im Druckmittelvorrat unter den Lösedruck des Federspeicherbremszylinders ansprechende Federspeicherbremsanlage bei gewolltem Druckabfall als Hilfsbremse und/oder als Feststellbremse und bei ungewolltem Druckabfall als selbsttätige Notbremse dient. Eine derartige Bremsanlage, in der die Betriebsbremsanlage und die Feder speicherbremsanlage aus einem gemeinsamen Druckmittelvorrat versorgt werden, ist auf allen Gebieten der Fahrzeugtechnik, z.B. bei Motorfahrzeugen, Omnibussen und bei Anhängern, bekannt. Gewollt kann der zum Ansprechen der Federspeicherbremsanlage führende Druckabfall in der Vorratsleitung und/oder im Druckmittelvorrat durch geeignete und bekannte Steuereinrichtungen wie Ventile herbeigeführt werden. Im Fall eines Anhängers können diese Steuereinrichtungen im Zugfahrzeug und/oder im Anhänger selbst vorgesehen sein.

Nachteilig ist an der bekannten Bremsanlage, daß der zum Ansprechen der Federspeicherbremsanlage führende Druckabfall in der Vorratsleitung und/oder im Druckmittelvorrat durch hohen Druckmittelverbrauch seitens der Betriebsbremsanlage, wie er in einer Regelphase der Blockierschutzanlage, insbesondere beim Befahren einer längeren Strecke mit niedrigem Kraftschlußbeiwert, auftritt, hervorgerufen werden kann. Als Folge tritt ein selbsttätiges ungewolltes Ansprechen der Federspeicherbremsanlage auf, welches kritische Fahrzustände verursachen kann.

Der Erfindung liegt deshalb die Aufgabe zugrunde eine Bremsanlage der eingangs genannten Art mit einfachen Mitteln derart zu verbessern, daß höher Druckmittelverbrauch in einer Regelphase der Blockierschutzanlage nicht zu einem selbsttätigen Ansprechen der Federspeicherbremsanlage führt.

Diese Aufgabe wird durch die im Patentanspruch 1 angegebene Erfindung gelöst. Weiterbildungen und vorteilhafte Ausgestsltungen sind in den Unteransprüchen angegeben.

Der Erfindung liegt, vereinfacht ausgedrückt, der Gedanke zugrunde, die Druckmittelzuführung zwischen Druckmittelvorrat und Lösekammer des Federspeicherbremszylinders mittels eines Sperrventils zu sperren, wenn die Blockierschutzanlage in eine Regelphase eintritt.

Dadurch verhindert die Erfindung eine Fortpflanzung des Druckabfalls in der Vorratsleitung und/oder dem Druckmittelvorrat in die Lösekammer des Federspeicherbremszylinders und damit ein Ansprechen der Federspeicherbremsanlage, wenn durch den genannten Druckabfall der Lösedruck des Federspeicherzylinders erreicht wird.

In einer Ausgestaltung können Schaltmittel vorgesehen sein, welche die Schaltbarkeit des Sperrventils in seine Sperrstellung sperren, wenn der Druck in der Vorratsleitung und/oder im Druckmittelvorrat einen vorbestimmten oberen Grenzdruck überschreitet. Dadurch kann sichergestellt werden, daß das Sperrventil nicht in jeder Regelphase der Blockierschutzanlage in seine Sperrstellung geschaltet wird, sondern nur, wenn gleichzeitig der Druck in der Vorratsleitung und/oder im Druckmittelvorrat auf den oberen Grenzdruck abgefallen ist oder abfällt. Damit beim Unterschreiten des oberen Grenzdruckes der Federspeicherzylinder nicht schon angesprochen hat, muß der obere Grenzdruck wenigstens dessen Lösedruck entsprechen.

In einer Ausgestaltung sind Schaltmittel vorgesehen, die nach einem Abfall des Druckes in der Vorratsleitung und/oder im Druckmittelvorrat unter einen bzw. den oberen Grenzdruck das Sperrventil in der Sperrstellung halten, bis der genannte Druck den oberen Grenzdruck wieder erreicht. Diese Ausgestaltung bewirkt, daß die Beendigung einer Regelphase bei unter den oberen Grenzdruck abgefallenem genanntem Druck nicht das Ansprechen der Federspeicherbremsanlage auslöst.

In einer Ausgestaltung sind weitere Schaltmittel vorgesehen, welche die Schaltung des Sperrventils in der Sperrstellung halten, bis der Druck in der Vorratsleitung und/oder im Druckmittelvorrat einen vorbestimmten unteren Grenzdruck unterschreitet. Dadurch kann beispielsweise sichergestellt werden, daß in einer Notsituation die Federspeicherbremsanlage zur Verfügung steht, wobei der untere Grenzdruck einen eine Notsituation definierenden Druckabfall kennzeichnen müßte.

In einer Kombination der vorstehend erwähnten Ausgestaltungen hält die Erfindung das Sperrventil nach Beendigung einer Regelphase der Blockierschutzanlage so lange geschlossen, bis der Druck in der Vorratsleitung und/oder in dem Druckmittelvorrat den oberen Grenzdruck wieder übersteigt, öffnet das Sperrventil jedoch, wenn der genannte Druck den unteren Grenzdruck, z.B. in einer Notsituation, unterschreitet.

Der zuletzt erwähnte Druckabfall kann außer durch eine Störung (selbsttätige Notbremsung) auch vom Fahrer durch Betätigung einer Steuereinrichtung ausgelöst werden. Damit stellt die Erfindung in vorteilhafter Weise sicher, daß die gewollte Betätigungsmöglichkeit der Federspeicherbremsanlage erhalten bleibt.

Die genannten Schaltmittel können elektrisch und/oder baulich ganz oder teilweise zusammengefäßt sein.

In vorteilhafter Weise wird auch ein Ansprechen der Federspeicherbremsanlage verhindert, wenn der obere Grenzdruck bei Beginn einer Regelphase der Blockierschutzanlage aufgrund vorheriger Betätigungen der Betriebs- und/oder Federspeicherbremsanlagen oder aufgrund von Defekten unterschritten ist.

In einer Ausführungsform, bei der die Schaltmittel nur aus einem den unteren Grenzwert überwachenden Druckschalter und/oder einem den oberen Grenzdruck überwachenden Druckschalter sowie einem mit diesen in der in dem Anspruch 5 angegebenen Weise zusammenarbeitenden Relais ausgebildet sind, läßt sich die Erfindung mit handelsüblichen Bauelementen ausführen, die diskret oder integriert angeordnet sein können. Das gleiche gilt für eine Ausgestaltung, bei der die Schaltmittel aus einem die Grenzdrücke überwachenden Zweipunkt-Druckschalter und einem mit diesem in der in Anspruch 6 angegebenen Weise zusammenwirkenden Relais bestehen. Die Ausgestaltung nach Anspruch 6 hat dabei gegenüber Lösungen nach vorangehenden Ansprüchen den Vorteil (im Sinne niedrigen Stromverbrauchs), daß das Sperrventil und das Relaisventil nicht erregt sind, solange der obere Grenzdruck überschritten ist.

Eine Ausgestaltung der Schaltmittel mit Drucksensor und dessen Drucksignale auswertender, dem Sperrventil-Schaltkreis zugeordneter Logik nach Anspruch 7 ermöglicht eine besonders kompakte und energiesparende Bauweise, wobei die Logik diskret von der Blockierschutzanlage, insbesondere deren Regelelektronik angeordnet oder in diese integriert sein kann.

Die Ausgestaltungen mit von der Blockierschutzanlage diskreter Anordnung der Schaltmittel bieten den Vorteil, daß sie die Verwendung handelsüblicher Blockierschutzanlagen ermöglichen.

Die Erfindung wird nachstehend anhand von in den Zeichnungen dargestellen Ausführungsbeispielen erläutert.

Es zeigen

Fig. 1 schematisch eine druckmittelbetätigte Bremsanlage,

Fig. 2 eine Bremsanlage nach Fig. 1 mit anders ausgebildeten Schaltmitteln,

Fig. 3 eine Bremsanlage nach Fig. 1 mit einer weiteren Ausbildung der Schaltmittel,

Fig. 4 eine vereinfachte Bremsanlage nach Fig. 3.

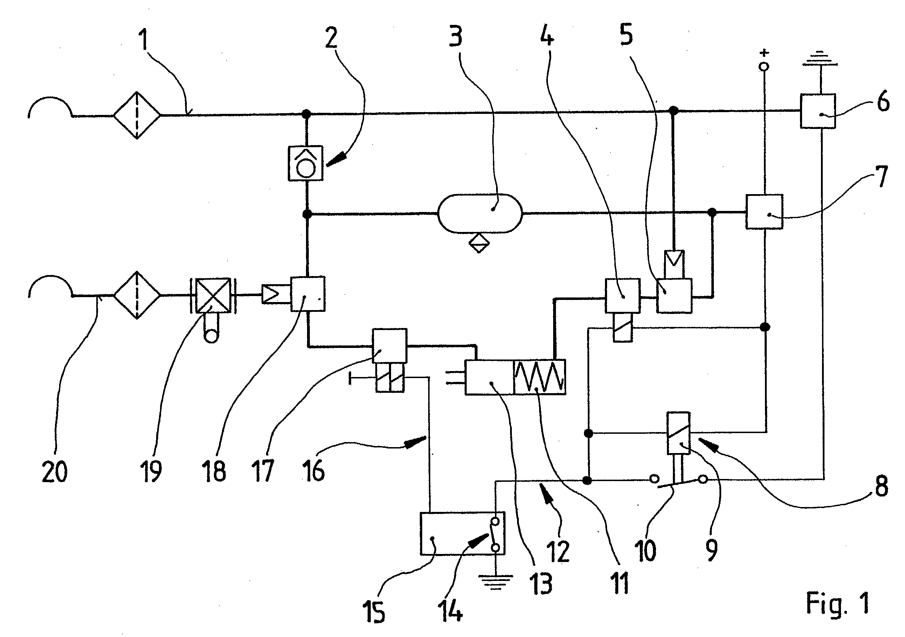

Fig. 1 zeigt schematisch eine druckmittelbetätigte (pneumatische) Bremsanlage mit einer Betriebsbremsanlage und einer Federspeicherbremsanlage, die aus einem gemeinsamen Druckmittelvorrat 3 versorgt werden, welcher seinerseits über eine Vorratsleitung 1 gespeist wird, wobei der Betriebsbremsanlage eine Blockierchutzanlage 16, die durch ein Regelventil 17 und eine Regelelektronik 15 symbolisiert ist, zugeordnet ist.

Das Ausführungsbeispiel stellt eine Anhängerbremsanlage dar, die über die Vorratsleitung 1, welche in nicht näher bezeichneter Weise einen Kupplungskopf und einen Leitungsfilter aufweist, mit der Druckmittelbeschaffungsanlage eines Zugfahrzeugs verbindbar und deren aus einem Betriebsbremszylinder 13, einem lastabhängigen Bremskraftregler 19, und einem Bremsventil 18 bestehende Betriebsbremsanlage über eine Bremsleitung 20 pneumatisch steuerbar ist. Auch die Bremsleitung 20 weist in nicht näher bezeichneter Weise einen Kupplungskopf und einen Leitungsfilter auf. Denkt man sich die Vorratsleitung direkt mit einer Luftbeschaffungsanlage verbunden und das Bremsventil unmittelbar vom Fahrer betätigbar, so steht das Ausführungsbeispiel auch für die Bremsanlage eines anderen Fahrzeugs als eines Anhängers, beispielsweise eines Motorfahrzeugs oder eines Omnibusses.

Zur Sicherung des Druckmittelvorrats 3 gegen Druckabfall in der Vorratsleitung 1 erfolgt seine Versorgung über ein Rückschlagventil 2, welches in Richtung des Druckmittelvorrats 3 durchlässig ist und die Gegenrichtung sperrt.

Alle erwähnten Anlagen und Komponenten derselben sind für sich und in ihren vielfältigen Anordnungsmöglichkeiten untereinander bekannt.

Bei Betätigung wird die Betriebsbremsanlage in bekannter Weise mit Druckluft aus dem Druckmittelvorrat 3 beaufschlagt, wobei die Blockierschutzanlage 16 in ebenfalls bekannter Weise mitwirkt.

Die Federspeicherbremsanlage besteht aus einem Federspeicherbremszylinder 11, der in bekannter Weise aufgebaut ist und eine aus dem Druckmittelvorrat 3 beaufschlagbare Lösekammer aufweist, sowie einem deren Verbindung mit dem Druckmittelvorrat 3 kontrollierenden Relaisventil 5, welches an seinem Steueranschluß mit der Vorratsleitung 1 verbunden ist. Solange der Druck in der erwähnten Lösekammer größer als der oder gleich dem Lösedruck des Federspeicherbremszylinders 11 ist, bleibt dieser in Lösestellung. Bei einem Druckabfall in der Lösekammer unter den Lösedruck entwickelt der Federspeicherbremszylinder 11 eine sich im wesentlichen umgekehrt proportional zum Druck in der Lösekammer verhaltende Zuspannkraft, die bei völliger Druckentlastung der Lösekammer ihren Höchstwert erreicht.

Federspeicherbremszylinder 11 und Betriebsbremszylinder 13 sind in bekannter Weise zu einer kombinierten Zylindereinheit 12 zusammengefaßt. Sie können in nicht dargestellter Weise auch als Einzelzylinder ausgebildet sein.

In der Druckmittelzuführung vom Druckmittelvorrat 3 zur Lösekammer des Federspeicherbremszylinders 11 ist ein elektrisch betätigbares Sperrventil 4 angeordnet, dessen elektrisches Stellglied, im folgenden Magnet genannt, mit einem in der Blockierschutzanlage 16, speziell in deren Regelelektronik 15, vorgesehenen Schaltelement 14 und einem den Druck des Druckmittelvorrats 3 überwachenden ersten Druckschalter 7 in der Reihe liegt. Der erste Druckschalter 7 ist so ausgebildet, daß er schließt, wenn der Druck im Druckmittelvorrat 3 einen vorbestimmten oberen Grenzdruck unterschreitet. Dieser obere Grenzdruck ist mindestens so hoch wie, besser höher als, der Lösedruck des Federspeicherbremszylinders 11.

Parallel zum Sperrventil 4, genauer: parallel zu dessen Magnet, aber ebenfalls in Reihe mit dem Schaltelement 14 und dem ersten Druckschalter 7 ist die Wicklung 9 eines Relais 8 angeordnet, dessen Kontakt 10 in Reihe mit dem Schaltelement 14 und einem zweiten Druckschalter 6 liegt. Letzterer überwacht den Druck in der Vorratsleitung 1 und öffnet bie Unterschreiten eines unteren Grenzdrucks. Erster und zweiter Druckschalter liegen netzseitig an entgegengesetzten Polen, wie beispielhaft durch das "+"-Zeichen beim ersten Druckschalter 7 und das Massezeichen beim zweiten Druckschalter 6 zum Ausdruck gebracht ist.

Für die nachstehende Funktionsbeschreibung sei angenommen, daß der Nenndruck in der Vorratsleitung 1 und damit im wesentlichen auch im Druckmittelvorrat 3 7.0 bar, der obere Grenzdruck 5,5 bar, der untere Grenzdruck 1,5 bar und der Lösedruck des Federspeicherbremszylinders 11 4,5 bar betragen.

Im normalen Fahrbetrieb steht in Vorratsleitung 1, Druckmittelvorrat 3, Lösekammer des Federspeicherbremszylinders 11 sowie am Steueranschluß des Relaisventils 5 und an den Druckschaltern 6, 7 der Nenndrück von 7,0 bar an. In diesem Zustand sind der Federspeicherbremszylinder 11 gelöst, der erste Druckschalter 7 sowie das Sperrventil 4 und das Relais 8 geöffnet und der zweite Druckschalter 6 geschlossen.

Tritt in der Vorratsleitung 1 bzw. in den ihr vorgeschalteten Komponenten des Zugfahrzeugs oder der Luftbeschaffungsanlage ein Defekt , z.B. Abreißen der Vorratsleitung, auf, der zu einem Druckabfall in der Vorratsleitung 1 führt, so wird der Druckmittelvorrat 3 von diesem Druckabfall durch das Rückschlagventil 2 getrennt. Fällt der Druck in der Vorratsleitung 1 auf den Lösedruck vom 4, 5 bar und darunter ab, so wird der Federspeicherbremszylinder 11 von dem Relaisventil 5 zum Ansprechen gesteuert.

Entsprechend wirkt die Federspeicherbremsanlage, wenn der Druck in der Vorratsleitung 1 über eine Steuereinrichtung gewollt zwecks Feststellbremsung völlig oder zwecks Hilfsbremsung teilweise abgesenkt wird.

Der Druck im Druckmittelvorrat 3 fällt, abgesehen von Defekten, bei nicht ausreichender Nachspeisung durch die Vorratsleitung 1 infolge Luftverbrauchs bei Betätigung der Betriebsbremsanlage und/oder der Federspeicherbremsanlage ab. Ein Druckabfall im Druckmittelvorrat 3 hat einen im wesentlichen gleichen Druckabfall in der Vorratsleitung 1 und damit am Steueranschluß des Relaisventils 5 zur Folge, da das Rückschlagventil 2 die Vorratsleitung 1 gegen diesen Druckabfall nicht schützt.

Am häufigsten tritt ein Druckabfall im Druckmittelvorrat 3 bei Betätigung der Betriebsbremsanlage, insbesondere in längeren Regelphasen der Blockierschutzanlage 16, auf.

Ist der Druck im Druckmittelvorrat 3 auf den oberen Grenzdruck von 5,5 bar abgefallen, schließt der erste Druckschalter 7. Tritt jetzt die Blockierschutzanlage in eine Regelphase, so schließt auch deren Schaltelement 14, wodurch der Erregerkreis des Magneten geschlossen wird. Das gleiche geschieht, wenn die Blokkierschutzanlage 16 sich in einer Regelphase befindet und der Druck im Druckmittelvorrat 3 auf 5,5 bar abfällt. In diesem Zustand ist die Lösekammer des Federspeicherbremszylinders 11 durch das Sperrventil 4 von einem weiteren Druckabfall im Druckmittelvorrat 3 getrennt und dadurch die Federspeicherbremsanlage gegen Ansprechen gesichert.

Gleichzeitig mit dem Erregerkreis des Magneten wird auch der Erregerkreis der Wicklung 9 des Relais 8 und dadurch dessen Kontakt 10 geschlossen.

Geht jetzt die Blockierschutzanlage in ihren Ruhezustand über, wobei das Schaltelement 14 öffnet, so bleibt die Wicklung 9 des Relais 8 über die geschlossenen Druckschalter 6, 7 erregt und dadurch das Relais 8 und das Sperrventil 4 in Selbsthaltung. Erst wenn der Druck im Druckmittelvorrat 3 wieder 5,5 bar erreicht und infolgedessen der erste Druckschalter 7 öffnet, wird die Wicklung 9 entregt, dadurch die genannte Selbsthaltung aufgehoben und die Federspeicherbremsanlage über das Relaisventil 5 wieder steuerbar.

Die erwähnte Selbsthaltung wird auch aufgehoben und damit die Federspeicherbremsanlage steuerbar, wenn der zweite Druckschalter 6 bei Abfall des Drucks in der Vorratsleitung 1 auf den unteren Grenzdruck von 1,5 bar öffnet. Dieser Druckabfall kann durch Defekte (Fall der Notbremsung) oder gewollt zum Zwecke der Hilfsbremsung oder der Feststellbremsung bewirkt werden. Die Federspeicherbremsanlage bleibt also durch den Fahrer steuerbar, in Regelphasen der Blockierschutzanlage, allerdings nur, wenn der genannte Druck größer als der obere Grenzdruck von 5,5 bar ist.

Zum Zwecke der beschriebenen Wirkung muß das Sperrventil 4 in der Leitung zwischen Relaisventil 5 und Lösekammer des Federspeicherbremszylinder 11 angeordnet sein.

Der erste Druckschalter 7 kann auch an die Vorratsleitung 1 angelegt werden, da, wie oben schon gesagt deren Druck einem Druckabfall im Druckmittelvorrät 3 folgt.

Aufgrund der beschriebenen Funktion bilden die erwähnten Druckschalter 6, 7 und das Relais 8 Schaltmittel, welche die Schaltung des Sperrventils 4 in seine Sperrstellung ermöglichen, wenn der Druck in der Vorratsleitung und/oder im Druckmittelvorrat einen vorbestimmten oberen Grenzdruck unterschreitet und das Sperrventil (nach mindestens einmaligem Schließen des Schaltelements 14) in der Sperrstellung halten, bis der genannte Druck den oberen Grenzdruck wieder erreicht oder der Druck in der Vorratsleitung einen vorbestimmten unteren Grenzdruck unterschreitet.

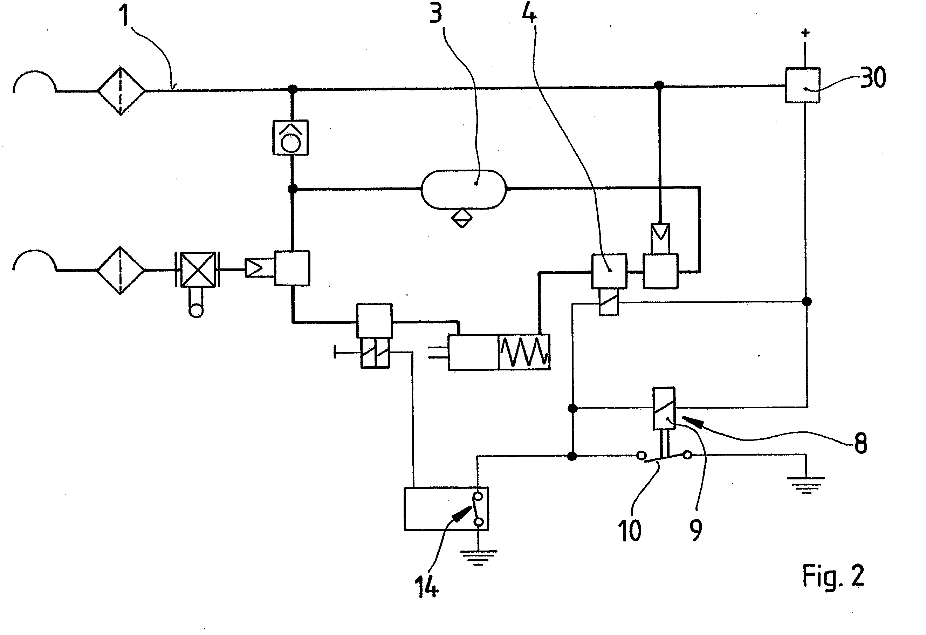

Das Ausführungsbeispiel nach Fig. 2 entspricht mit Ausnahme der Schaltmittel in Aufbau und Wirkungsweise dem vorigen Ausführungsbeispiel.

Die Schaltmittel bestehen in diesem Fall außer aus dem Relais 8 aus einem den Druck der Vorratsleitung überwachenden Zweipunkt-Druckschalter 30, der bei Unterschreiten des oberen Grenzdrucks schließt und bei Unterschreiten des unteren Grenzdrucks öffnet. Geschaltet sind die Schaltmittel in diesem Fall derart, daß der Zweipunkt-Druckschalter 30 einerseits in Reihe mit dem Schaltelement 14 und dem Sperrventil 4 und andererseits in Reihe mit dem Schaltelement 14 und der parallel zum Sperrventil 4, genauer: des Magneten, liegenden Wicklung 9 des Relais 8 angeordnet ist, wobei das Relais 8, genauer: dessen Kontakt 10, in eingeschaltetem Zustand das Schaltelement 14 kurzschließen kann. Mit anderen Worten: der Schalter 10 des Relais 8 ist zu dem Schaltelement 14 parallel angeordnet.

Anders als dargestellt, kann der Zweipunkt-Druckschalter drückseitig auch mit seinem auf Unterschreiten des oberen Grenzdrucks reagierenden Teil an den Druckmittelvorrat 3 angelegt werden.

Der in integrierter Bauweise dargestellte Zweipunkt-Druckschalter 30 kann in nicht dargestellter Weise auch aus diskreten Elementen bestehen, die zur Erzielung der erforderlichen Wirkungsweise logisch miteinander verknüpft sein können.

Der in Fig. 2 dargestellte Druckschalter kann in vereinfachter Lösungsform auch als einfacher oberhalb eines unteren Grenzdrucks geschlossener Druckschalter - wie Position 7 in Fig. 1 - ausgeführt sein. Dann ergibt sich bei einer Anordnung nach Fig. 2 die Funktion, daß das Sperrventil 4 nach mindestens einmaliger Betätigung des Schaltelements 14 (dauernd) geschlossen bleibt, bis der Vorratsdruck in Leitung 1 den unteren Grenzdruck unterschreitet. Dieses hat den Nachteil eines höheren Stromverbrauchs und eingeschränkter Federspeicherbetätigung.

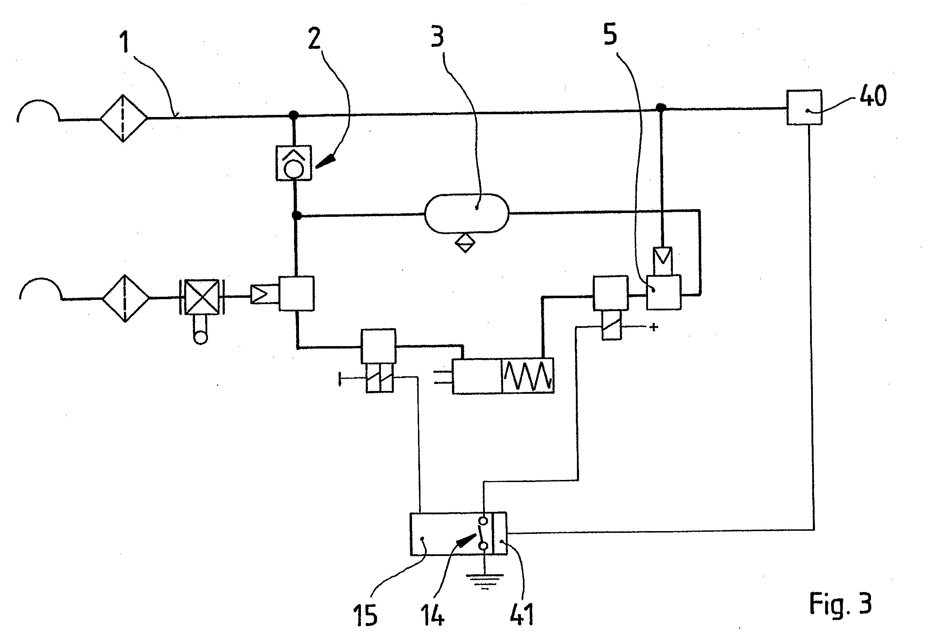

Das Ausführungsbeispiel nach Fig. 3 entspricht mit Ausnahme der Schaltmittel in Aufbau und Wirkungsweise den vorstehend beschriebenen. Die Schaltmittel bestehen in diesem Fall aus einem den Druck der Vorratsleitung 1 überwachenden Drucksensor 40, dessen Drucksignale einer dem Schaltelement 14 zugeordneten Logik 41 zugeführt werden, von der sie zur Steuerung des Schaltelements 14 im Sinne der oben beschriebenen Funktionsweise ausgewertet werden.

Anders als dargestellt, kann der Druckschalter 40 auch aus mehreren diskreten Bausteinen bestehen, deren einer den Druck im Druckmittelvorrat 3 überwachen kann.

Die Logik 41 ist im vorliegenden Ausführungsbeispiel integriert in die Regelelektronil 15 dargestellt. Sie kann auch diskret ausgebildet werden und damit, wie auch die früheren Ausführungsbeispiele, die Verwendung einer handelsüblichen Blockierschutzanlage, insbesondere deren Regelelektronik, ermöglichen.

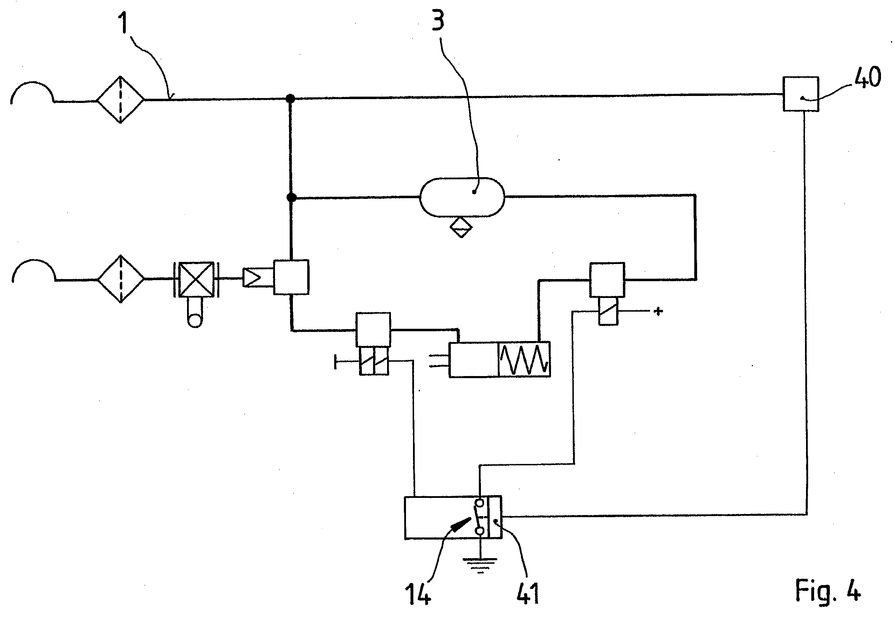

Das Ausführungsbeispiel nach Fig. 4 zeigt eine vereinfachte Ausführung des vorigen Ausführungsbeispiels. Ein Vergleich zeigt, daß dem vorliegenden Ausführungsbeispiel das Rückschlagventil 2 und das Relaisventil 5 fehlen. In diesem Fall weisen Vorratsleitüng und Druckmittelvorrat stets gleichen Druck bzw. gleichen Druckabfall auf. Die Steuerung des Federspeicherzylinders erfolgt in diesem Fall durch Absenkung des Druckniveaus in der gesamten Anlage.

Auch die früheren Ausfühhungsbeispiele lassen sich mit der dargestellten Vereinfachung realisieren. Derart vereinfachte Ausgestaltungen haben als Nachteile, daß die Federspeicherbremsanlage mit Verzögerung anspricht und daß das nach jeder Betätigung der Federspeicherbremsanlage erforderliche Wiederauffüllen der gesamten Anlage mit hohem Energieverbrauch einhergeht.

Vorteile der vereinfachten Anlage sind, daß sie wegen des Entfalls der genannten Komponenten kostengünstig herstellbar ist und, da nur ein Druck zu überwachen ist, auch größere Freizügigkeit bei der Anordnung der Druckschalter und des Drucksensors bzw. der Drucksensoren bietet.

Es liegt auf der Hand, daß der Anwendungsbereich der Erfindung sich nicht in den dargestellten Ausführungsbeispielen erschöpft. Insbesondere läßt sich die Erfindung auch außer in pneumatischen in durch andere Druckmittel betätigten Bremsanlagen realisieren. Auch können anstatt der vorstehenden beispielhaften Zahlenannahmen jedem Anwendungsfall und Betriebsfall angemessene Auslegungsdaten zugrundegelegt werden. Es liegt auch insbesondere auf der Hand, daß die vorstehend gemachten Ausführungen für Betriebs- und Federspeicherbremsanlagen mit mehreren Zylindern und/oder kombinierten Zylindereinheiten entsprechend gelten.

Die beschriebene Selbsthaltung kann mit allen geeigneten Selbsthalteschaltungen erzielt werden.

## Patentansprüche

1. Druckmittelbetätigte Bremsanlage eines Fahrzeugs, insbesondere Anhängerbremsanlage, mit einer Betriebsbremsanlage und einer Federspeicherbremsanlage mit wenigstens einem Federspeicherbremszylinder, die aus einem gemeinsamen Druckmittelvorrat versorgt werden, welcher seinerseits über eine Vorratsleitung gespeist wird, wobei der Betriebsbremsanlage eine Blockierschutzanlage zugeordnet ist,
gekennzeichnet durch die Merkmale:
in der Druckmittelzuführung vom Druckmittelvorrat (3) zur Lösekammer des Federspeicherbremszylinders (11) ist ein Sperrventil (4) angeordnet, welches über ein Schaltelement (14) der Blockierschutzanlage (16) in deren Regelphase in eine die Druckmittelzuführung sperrende Sperrstellung geschaltet wird.

2. Druckmittelbetätigte Bremsanlage nach Anspruch 1, dadurch gekennzeichnet,
daß Schaltmittel vorgesehen sind, welche die Schaltbarkeit des Sperrventils in seine Sperrstellung sperren, wenn der Druck in der Vorratsleitung (1) und/oder im Druckmittelvorrat (3) einen vorbestimmten oberen Grenzdruck überschreitet.

3. Druckmittelbetätigte Bremsanlage nach einem der Ansprüche 1 oder 2, dadurch gekennzeichnet,
daß Schaltmittel vorgesehen sind, die nach einem Abfall des Drucks in der Vorratsleitung (1) und/oder im Druckmittelvorrat (3) unter einen bzw. den oberen Grenzwert das Sperrventil in der Sperrstellung halten, bis der genannte Druck den oberen Grenzdruck wieder erreicht.

4. Druckmittelbetätigte Bremsanlage nach einem der vorhergehenden Ansprüche, dadurch gekennzeichnet, daß weitere Schaltmittel vorgesehen sind, welche die Schaltung des Sperrventils (4) in der Sperrstellung halten, bis der Druck in der Vorratsleitung (1) und/oder im Druckmittelvorrat (3) einen vorbestimmten unteren Grenzdruck unterschreitet.

5. Druckmittelbetätigte Bremsanlage nach den Ansprüchen 2 bis 4, dadurch gekennzeichnet, daß die Schaltmittel folgende Merkmale aufweisen:
a) es ist ein den oberen Grenzdruck überwachender und bei dessen Überschreiten öffnender erster Druckschalter (7) und ein den unteren Grenzdruck überwachender und bei dessen Unterschreiten öffnender zweiter Druckschalter (6) vorgesehen;
b) der erste Druckschalter (7) ist einerseits in Reihe mit dem Schaltelement (14) und dem Sperrventil (4) und andererseits in Reihe mit dem Schaltelement (14) und der Wicklung (9) eines parallel zum Sperrventil (4) liegenden Relais (8) angeordnet;

c) der zweite Druckschalter (6) ist parallel zu dem Schaltelement (14) und in Reihe mit dem Kontakt (10) des Relais (8) angeordnet.

6. Druckmittelbetätigte Bremsanlage nach den Ansprüchen 2 bis 4, dadurch gekennzeichnet, daß die Schaltmittel folgende Merkmale aufweisen:

a) es ist ein entweder aus diskreten Elementen oder aus integrierten Elementen bestehender, die Grenzdrücke überwachender Zweipunkt-Druckschalter (30) vorgesehen, der bei Überschreiten des oberen Grenzdruckes öffnet und bei Unterschreiten des unteren Grenzdruckes öffnet;

b) der Zweipunkt- Druckschalter (30) ist einerseits in Reihe mit dem Schaltelement (14) und dem Sperrventil (4) und andererseits in Reihe mit dem Schältelement (14) und der parallel zum Sperrventil (4) liegenden Wicklung (9) eines Relais (8) angeordnet, welches in eingeschaltetem Zustand das Schaltelement (14) kurzschließen kann.

7. Druckmittelbetätigte Bremsanlage nach den Ansprüchen 2 bis 4, dadurch gekennzeichnet, daß die Schaltmittel aus wenigstens einem den Druck in der Vorratsleitung (1) und/oder dem Druckmittelvorrat(3)überwachenden Drucksensor (40) und einer dessen Drucksignale auswertenden, dem Schaltelement (14) zugeordneten Logik (41) bestehen.

## Claims

1. A pressure medium-actuated braking system of a vehicle, in particular a trailer braking system, having a service braking system and a spring-actuated braking system with at least one spring-actuated brake cylinder, which are supplied from a common pressure medium reservoir which in its turn is fed by way of a supply line, wherein the service braking system includes an anti-lock system, characterized by the features that:
in the pressure medium feed from the pressure medium reservoir (3) to the release chamber of the spring-actuated brake cylinder (11) there is arranged a blocking valve (4) which is switched by way of a circuit element (14) of the anti-lock system (16) in the control phase thereof into a position blocking the pressure medium feed.

2. A pressure medium-actuated braking system according to claim 1, characterized in that switching means are provided which block the ability of the blocking valve to switch into its blocking position whenever the pressure in the supply line (1) and/or in the pressure medium reservoir (3) exceeds a predetermined upper limit pressure.

3. A pressure medium-actuated braking system according to one of claims 1 or 2, characterized in that switching means are provided which, following a drop in pressure in the supply line (1) and/or in the pressure medium reservoir (3) to below a or the upper limit value, keep the blocking valve in its blocking position until the said pressure reaches the upper limit pressure again.

4. A pressure medium-actuated braking system according to one of the preceding claims, characterized in that additional switching means are provided which maintain the setting of the blocking valve (4) in the blocking position until the pressure in the supply line (1) and/or in the pressure medium reservoir (3) falls below a predetermined lower limit pressure.

5. A pressure medium-actuated braking system according to claims 2 to 4, characterized in that the switching means have the following features:

a) there is provided a first pressure switch (7) monitoring the upper limit pressure and opening whenever this is exceeded and a second pressure switch (6) monitoring the lower limit pressure and opening whenever this is fallen below,

b) the first pressure switch (7) is connected on the one hand in series with the circuit element (14) and the blocking valve (4) and on the other hand is connected in series with the circuit element (14) and the winding (9) of a relay (8) connected in parallel with the blocking valve (4);

c) the second pressure switch (6) is connected in parallel with the circuit element (14) and in series with the contact (10) of the relay (8).

6. A pressure medium-actuated braking system according to claims 2 to 4, characterized in that the switching means have the following features:

a) a two-position pressure switch (30) comprising either discrete elements or integrated elements and monitoring the limit pressures is provided which switch opens whenever the upper limit pressure is exceeded and opens whenever the lower limit pressure is fallen below;

b) the two-position pressure switch (30) is connected on the one hand in series with the circuit element (14) and the blocking valve (4) and on the other hand in series with the circuit element (14) and the winding (9) of a relay (8) connected in parallel with the blocking valve (4) which relay, when it is energized is able to short-circuit the circuit element (14).

7. A pressure medium-actuated braking system according to claims 2 to 4, characterized in that the switching means consists of at least one pressure sensor (40) monitoring the pressure in the supply line (1) and/or in the pressure medium reservoir (3) and a logic unit (41) associated with the circuit element (14) evaluating the pressure signals of the sensor (40).

## Revendications

1. Installation de freinage d'un véhicule, actionné par un fluide sous pression, en particulier installation de freinage d'une remorque, comportant une installation de freinage de marche normale et une installation de freinage à ressort accumulateur comprenant au moins un cylindre de frein à ressort accumulateur, qui sont alimentés à partir d'un réservoir commun de fluide sous pression lui-même alimenté, de son côté, par l'intermédiaire d'une conduite d'alimentation, étant précisé qu'à l'installation de freinage de marche normale correspond une installation antiblocage, caractérisée par les caractéristiques suivantes:

sur la conduite amenant le fluide sous pression, depuis le réservoir (3) de fluide sous pression, à la chambre de déblocage du cylindre de frein à ressort accumulateur (11) est disposée une vanne d'arrêt (4) qui commute dans une position d'arrêt, dans laquelle elle arrête l'arrivée du fluide sous pression, sous l'action d'un organe de commutation (14) de l'installation antiblocage (16) lorsque cette installation se trouve en phase de régulation.

2. Installation de freinage actionnée par un fluide sous pression selon la revendication 1, caractérisée en ce qu'il est prévu des moyens de commutation qui interdisent la possibilité, pour la vanne d'arrêt, de commuter dans sa position d'arrêt, lorsque la pression dans la conduite d'alimentation (1) et/ou dans le réservoir (3) de fluide sous pression passe au-dessus d'une pression limite supérieure prédéterminée.

3. Installation de freinage actionnée par un fluide sous pression selon l'une des revendications 1 ou 2, caractérisée en ce qu'il est prévu des moyens de commutation qui, après une chute de la pression dans la conduite d'alimentation (1) et/ou dans le réservoir (3) de fluide sous pression en dessous d'une valeur limite supérieure ou de la valeur limite supérieure, maintiennent la vanne d'arrêt dans sa position d'arrêt jusqu'à ce que la pression mentionnée atteigne à nouveau la pression limite supérieure.

4. Installation de freinage actionnée par un fluide sous pression, selon l'une des revendications précédentes, caractérisée en ce qu'il est prévu d'autres moyens de commutation qui maintiennent la commutation de la vanne d'arrêt (4) dans la position d'arrêt jusqu'à ce que la pression dans la conduite du réservoir (1) et/ou dans le réservoir (3) de fluide sous pression passe en dessous d'une valeur limite inférieure prédéterminée.

5. Installation de freinage actionnée par un fluide sous pression selon les revendications 2 à 4, caractérisée en ce que les moyens de commutation présentent les caractéristiques suivantes:

a) il est prévu un premier pressostat (7) qui surveille la pression limite supérieure et s'ouvre en cas de dépassement, par valeur supérieure, de cette pression limite, et un second pressostat (6) qui surveille la pression limite inférieure et s'ouvre en cas de dépassement, par valeur inférieure, de cette pression limite,

b) le premier pressostat (7) est monté d'une part en série avec l'organe de commutation (14) et avec la vanne d'arrêt (4) et d'autre part en série avec l'organe de commutation (14) et avec le bobinage (9) d'un relais (8) monté en parallèle avec la vanne d'arrêt (4).

c) le second pressostat (6) est monté en parallèle avec l'organe de commutation (14) et en série avec le contact (10) du relais (8).

6. Installation de freinage actionnée par un fluide sous pression selon la revendication 2 à 4, caractérisée en ce que les moyens de commutation présentent les caractéristiques suivantes:

a) il est prévu un pressostat à deux points d'intervention (30), qui est constitué soit d'éléments distincts soit d'éléments intégrés, qui surveille les pressions limites, qui s'ouvre, en cas de dépassement, par valeur supérieure, de la pression limite supérieure et qui s'ouvre en cas de dépassement, par valeur inférieure, de la pression limite inférieure;

b) le pressostat à deux point d'intervention (30) est monté d'une part en série avec l'organe de commutation (14) et avec la vanne d'arrêt (4) et d'autre part en série avec l'organe de commutation (14) et le bobinage (9), lui-même monté en parallèle avec la vanne d'arrêt (4), d'un relais (8) qui, lorsque son contact est fermé, peut mettre en court-circuit l'organe de commutation (14).

7. Installation de freinage actionnée par un fluide sous pression selon les revendications 2 à 4, caractérisée en ce que les moyens de commutation sont constitués d'au moins un détecteur de pression (40) qui surveille la pression dans la conduite d'alimentation (1) et/ou dans le réservoir (3) de fluide sous pression et d'un circuit logique (41) qui traite les signaux de pression de ce détecteur de pression et qui correspond à l'organe de commutation (14).

Fig. 1

EP 0 226 714 B1

EP 0 226 714 B1

Fig. 2

Fig. 3

EP 0 226 714 B1

Fig. 4